# EUROPEAN PATENT APPLICATION

(11) **EP 4 718 912 A1**
(43) Date of publication of application: **01.04.2026**
(21) Application number: 25176091.4
(22) Date of filing: 13.05.2025
(51) Int. Cl.: H04W 36/08, H04W 84/12, H04W 88/12

(54) **WIRELESS ACCESS CONTROLLER AND CONTROLLER-BASED ROAMING METHOD**

(30) Priority: 27.09.2024 US 202463699815 P; 07.04.2025 US 202519172624
(71) Applicant: Moxa Inc., New Taipei City 242 (TW)
(72) Inventor: Chen, Xing-Yu, 242 New Taipei City (TW); Pai, Yuan-Ming, 242 New Taipei City (TW); Hsieh, Chang-Hung, 242 New Taipei City (TW)
(74) Representative: Straus, Alexander

(57) **Abstract**

A controller-based roaming method includes determining, by a station (108), whether to block an access point (104-106); sending, by the station, a block report of the access point to a wireless access controller (100); maintaining, by the wireless access controller, a block list according to the received block report; and performing, by the wireless access controller, roaming control for the station according to the block list and signal statuses reported by a plurality of access points (104-106).

## Description

### Field of the Invention

The present invention relates to a wireless access controller and a controller-based roaming method, and more particularly, to a wireless access controller and a controller-based roaming method for managing roaming of stations based on a block list of access points.

### Background of the Invention

Maintaining stable network connectivity during wireless LAN roaming is crucial when a station roams between access points (APs). To address this need, the controller-based roaming technology employs a wireless access controller to actively manage these roaming behaviors.

The current approach relies primarily on received signal strength indicator (RSSI) reports from access points to guide roaming decisions. However, this methodology fails to fully account for signal interference and other transmission challenges in the wireless environment. Various factors can compromise network performance after roaming, including severe signal interference that destabilizes traffic and malfunctioning power amplifier (PA) modules that generate problematic signals. Rather than improving connectivity and stability, these factors can actually degrade network performance following a roaming event.

### Summary of the Invention

Therefore, the present invention aims to provide a wireless access controller and a controller-based roaming method to ensure the traffic stability between the stations and the access points.

This is achieved by a controller-based roaming method according to the independent claim 1 or by a wireless access controller according to the independent claim 2 here below. The dependent claims pertain to corresponding further developments and improvements.

As will be seen more clearly from the detailed description following below, a controller-based roaming method is disclosed herein. The method includes determining, by a station, whether to block an access point; sending, by the station, a block report of the access point to a wireless access controller; maintaining, by the wireless access controller, a block list according to the received block report; and performing, by the wireless access controller, roaming control for the station according to the block list and signal statuses reported by a plurality of access points.

In another aspect of the invention, a wireless access controller is disclosed in the detailed description here below. The wireless access controller includes a processing unit and a storage unit. The processing unit is configured to execute a program code, and the storage unit is coupled to the processing unit and configured to store the program code to instruct the processing unit to execute a controller-based roaming method. The controller-based roaming method includes receiving a block report from a station; maintaining a block list according to the received block report; and performing roaming control for the station according to the block list and signal statuses reported by a plurality of access points.

### Brief Description of the Drawings

FIG. 1 is a schematic diagram of a network system according to an embodiment of the present invention.
FIG. 2 is a schematic flowchart of a controller-based roaming process according to an embodiment of the present invention.
FIG. 3 is a schematic flowchart of a blocking decision process according to an embodiment of the present invention.
FIG. 4 is a schematic flowchart of maintaining a block list according to an embodiment of the present invention.
FIG. 5 is a schematic flowchart of maintaining a block list according to an embodiment of the present invention.
FIG. 6 is a schematic flowchart of a roaming decision process according to an embodiment of the present invention.
FIG. 7 is a schematic flowchart of a roaming decision process according to an embodiment of the present invention.
FIG. 8 is a schematic flowchart of a roaming decision process according to an embodiment of the present invention.
FIG. 9 is a schematic diagram of a network device according to an embodiment of the present invention.

### Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to". Also, the term "couple" is intended to mean either an indirect or direct electrical connection. Accordingly, if one device is coupled to another device, that connection may be through a direct electrical connection, or through an indirect electrical connection via other devices and connections.

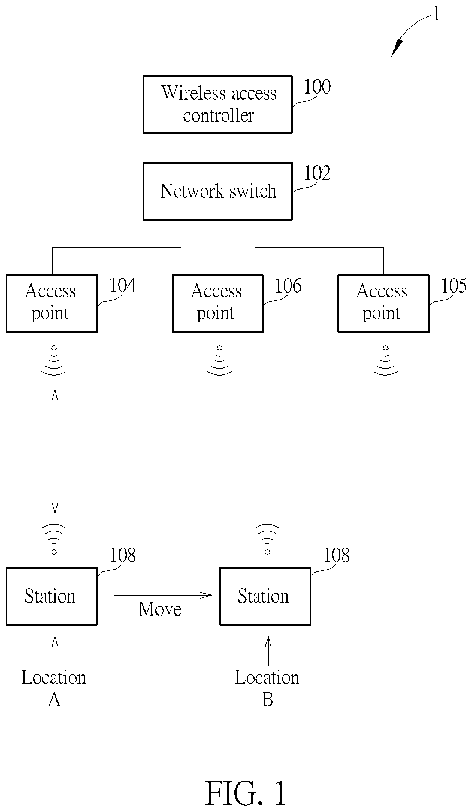

Please refer to FIG. 1, which is a schematic diagram of a network system 1 according to an embodiment of the present invention. The network system 1 comprises a wireless access controller 100, at least one network switch 102, access points 104-106, and a station 108. The wireless access controller 100, the at least one network switch 102, and the access points 104-106 may be physically (as shown in FIG. 1) or wirelessly (not illustrated) connected as a network infrastructure to provide a wireless access service of the network system 1. The station 108 may be wirelessly connected to the network system 1 through one of the access points 104-106 under the control of the wireless access controller 100.

It should be noted, the network system 1 in FIG. 1 is illustrated as one wireless access controller, one network switch, three access points and one station, which is simplified for illustration and not limited thereto. The network system 1 in the embodiment of the present invention may have multiple wireless access controllers, and each of the controllers manages the roaming of multiple stations among multiple access points.

In the network system 1, each of the access points 104-106 receives wireless signals of the station 108, measures the RSSI of the wireless signals related to the station 108, and makes an RSSI report thereof to the wireless access controller 100. On the other hand, the wireless access controller 100 receives the RSSI reports related to the station 108 from the access points 104-106, and may make a roaming decision for the station 108 accordingly.

In general, when activating in a location A, the station 108 may firstly connect to the nearest access point 104 having strongest signals at the location A and then register to the wireless access controller 100 through the access point 104. When the station 108 moves to a new location B from the location A, or the signals of the access point 104 become weaker with a signal strength lower than a threshold, the station 108 may roam to the closer access point 106 having stronger signals according to an instruction from the wireless access controller 100. After roaming, the station 108 may register to the wireless access controller 100 again through the newly connected access point 106.

However, the roaming decision made by the wireless access controller 100 mainly depends on the received RSSI reports sent by the access points 104-106. The RSSI refers to a measurement of power strength of the received radio signal. The larger the RSSI value is, the stronger the received signal strength is. In practice, however, a larger RSSI value does not necessarily indicate better signal quality.

For example, the wireless access controller 100 instructs the station 108 to roam to the access point 106 based on the RSSI value, but the signals from the access point 106 may be experiencing significant interference. In this situation, the station 108 detects the traffic issue through a keep-alive mechanism after roaming to the access point 106. And then, the station 108 disconnects from the access point 106, and may reconnect to the access point 104 again. What's worse is that the wireless access controller 100 may issue an indication to the station 108 to roam to the access point 106 based on the same reasons aforementioned again, causing the station 108 to continuously reconnect and roam between the access point 104 and the access point 106. As a result, in terms of data communication, the traffic becomes more unstable after roaming due to continuous connection and disconnection from the problematic access point 106.

Therefore, the present invention provides a wireless access controller and a controller-based roaming method that controls roaming more stably. In the present invention, a block list of access points is adopted to effectively filter out access points with problematic signals and thereby prevent the station from roaming thereto.

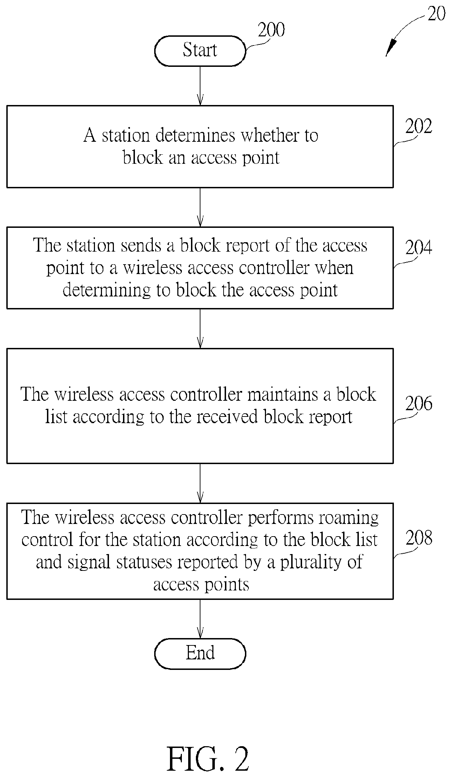

The controller-based roaming method in the embodiments of the present invention may be summarized into a controller-based roaming process 20 as shown in FIG. 2. The controller-based roaming process 20 comprises the following steps:
Step 200: Start.
Step 202: A station determines whether to block an access point.
Step 204: The station sends a block report of the access point to a wireless access controller when determining to block the access point.
Step 206: The wireless access controller maintains a block list according to the received block report.
Step 208: The wireless access controller performs roaming control for the station according to the block list and signal statuses reported by a plurality of access points.
Step 210: End.

The explanation for the controller-based roaming process 20 would be referred to along with Fig. 1. Assume that the station 108 is connected to the network system 1 through the access point 106 and is under the management of the wireless access controller 100. According to the controller-based roaming process 20, the station 108 monitors connection status to the access point 106, and thereby determines whether to block the currently connected access point 106 (Step 202) . When determining to block the access point 106, the station 108 sends a block report of the access point 106 to the wireless access controller 100 (Step 204). After receiving the block report, the wireless access controller 100 maintains a block list according to the received block report (Step 206). Then, the wireless access controller 100 may perform roaming control for the station 108 according to the block list and signal statuses reported by the access points 104-106 (Step 208). Accordingly, the wireless access controller 100 may manages the roaming of the station 108 according to the block list.

Before accepting the control of the wireless access controller 100, the station 108 should firstly register for the block list mechanism with the wireless access controller 100. Specifically, when starting up, the station 108 should firstly connect to the network system 1 through one of the access points 104-106 according to the signal strength thereof, and then registers to the wireless access controller 100 through a register request. After receiving the register request, the wireless access controller 100 returns an acknowledgement (ACK) of the register request including information of the wireless access controller 100 about supportability to the block list mechanism. If the wireless access controller 100 supports the block list mechanism, the station 108 enables the block list functionality and starts to monitor connection status to the currently connected access point; otherwise, the station 108 disables the block list functionality.

Take station 108 currently connected to the network system 1 through the access point 106 as an example. In Step 202, the station 108 determines whether to block the access point 106 after registering for the block list mechanism with the wireless access controller 100. Specifically, the station 108 determines whether to block the access point 106 according to a keep-alive mechanism with the access point 106. More specifically, the station 108 determines to block the access point 106 when a number of consecutive keep-alive failures that occur within a predetermined period exceeds a predetermined number.

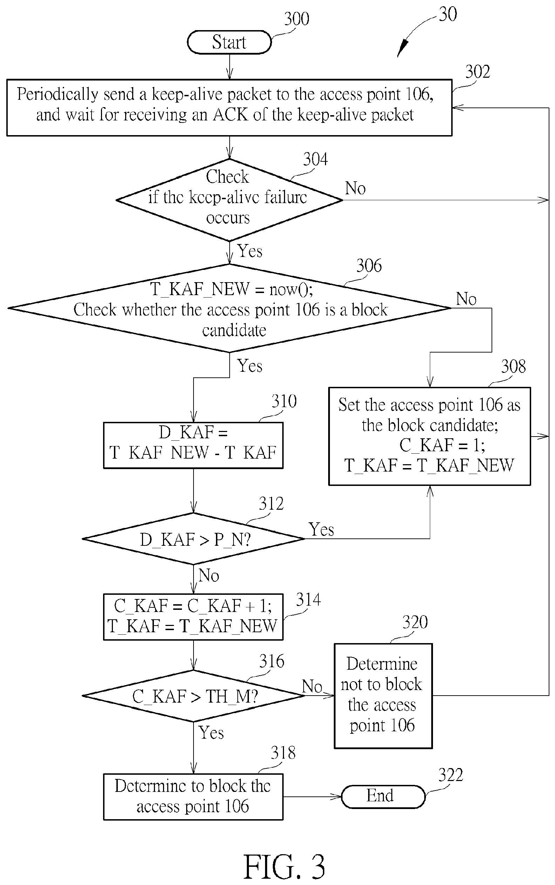

The method for the station 108 to determine whether to block the access point 106 in Step 202 may be summarized into a blocking decision process 30, as shown in FIG. 3. The blocking decision process 30 comprises the following steps:
Step 300: Start.
Step 302: The station 108 periodically sends a keep-alive packet to the access point 106, and waits for receiving an ACK of the keep-alive packet.
Step 304: The station 108 checks if the keep-alive failure occurs. If yes, proceed to Step 306; otherwise; proceed to Step 302.
Step 306: The station 108 records a keep-alive failure time T_KAF_NEW and checks whether the access point 106 is a block candidate. If yes, proceed to Step 310; otherwise, proceed to Step 308.
Step 308: The station 108 sets the access point 106 as the block candidate, sets a keep-alive failure count C_KAF to 1, and records a keep-alive failure time T_KAF as the keep-alive failure time T KAF NEW.
Step 310: The station 108 calculates a time difference D_KAF between the keep-alive failure time T_KAF_NEW and the keep-alive failure time T_KAF.
Step 312: The station 108 checks whether the time difference D_KAF is larger than a period of time P_N. If yes, proceed to Step 308; otherwise, proceed to Step 314.
Step 314: The station 108 increases the keep-alive failure count C_KAF by 1, and updates the keep-alive failure time T_KAF as the keep-alive failure time T_KAF_NEW.
Step 316: The station 108 checks whether the keep-alive failure count C_KAF is larger than a block threshold TH_M. If yes, proceed to Step 318; otherwise, proceed to Step 320.
Step 318: The station 108 determines to block the access point 106, and proceed to Step 322.
Step 320: The station 108 determines not to block the access point 106, and proceed to Step 322.
Step 322: End.

In brief, the station 108 monitors the connection status to the access point 106 through recording the keep-alive failure count C_KAF as the number of consecutive keep-alive failures that occur within the period of time P_N. If the time interval between two consecutive keep-alive failures exceeds the period of time P_N, the station 108 resets the keep-alive failure count C_KAF as 1; otherwise, the station 108 increases the keep-alive failure count C_KAF by 1. Once the keep-alive failure count C_KAF exceeds the block threshold TH_M, it means that the traffic between the access point 106 and the station 108 is quite unstable. Therefore, the station 108 should block the access point 106.

The keep-alive mechanism used in the blocking decision process 30 is a technique used to maintain an active network connection between two devices, which ensures that the connection does not time out or get disconnected. Through the keep-alive mechanism, the station 108 and the access point 106 are able to check whether the link between them is operating well or not. It should be noted, in Step 302, the station 108 implements the keep-alive mechanism through periodically sending a keep-alive packet to the access point 106 and waiting for receiving the ACK of the keep-alive packet, but is not limited thereto. In an embodiment, the keep-alive mechanism may be implemented by both the station 108 and the access point 106 periodically sending the keep-alive messages to each other. In this situation, the station 108 periodically sends the keep-alive packet to the access point 106 and waits for receiving the keep-alive packet sent by the access point 106 instead of the ACK in Step 302.

Accordingly, through the keep-alive mechanism, the access point is able to monitor the connection status to the access point and makes up for shortcomings of determining roaming decisions only through RSSI in the prior art.

Referring back to the controller-based roaming process 20 in FIG. 2, if determining to block the access point 106, the station 108 sends a block report of the access point 106 to the wireless access controller 100 in Step 204. Specifically, the station 108 sends the block report to the wireless access controller 100 through a register request and waits for an ACK of the register request from the wireless access controller 100. If the station 108 receives the ACK from the wireless access controller 100, the station 108 resets the access point 106 not to be the block candidate (i.e., the keep-alive failure count C_KAF is reset to be reaccumulated.); otherwise, the station 108 may continue to accumulate the keep-alive failure count C_KAF of the access point 106 in the blocking decision process 30 and send the block report to the wireless access controller 100 in Step 204 again.

It should be noted, the blocked access point is reported to the wireless access controller 100 through the access point that the station 108 currently connects to. If the station 108 sends the report of the blocked access point 106 to the wireless access controller 100 through the currently connected access point 106 and does not receive the ACK of the report through the access point 106, it means another keep-alive failure of the access point 106. In this situation, the station 108 may continue to count the number of the keep-alive failures for the access point 106. In another case, the station 108 may send the report of the blocked access point 106 to the wireless access controller 100 after connecting or roaming to another access point such as the access point 104 or 105. In this situation, if the station 108 does not receive the ACK of the report through the currently connected access point, the station 108 may start to count the number of the keep-alive failures for the newly connected access point. Therefore, the station 108 is capable of detecting problematic access points.

The block report sent by the station comprises a media access control (MAC) address of the access point to be blocked. For example, the block report sent by the station 108 in Step 204 may comprise the MAC address of the access point 106 to be blocked. Accordingly, the station 108 is able to determine whether to block the connected access point 106 and report the blocked access point 106 to the wireless access controller 100. On the other hands, the wireless access controller 100 is able to maintain a block list related to the blocked access points according to the received block reports. It should be noted, the station 108 is illustrated to connect to the network 1 through the access point 106 and only record the keep-alive failure count C_KAF of access point 106 in the processes 30 and 40. However, the station 108 is capable of recording keep-alive failure count C_KAF of each connected access point separately while roaming in the embodiment. For example, if the station 108 is roaming between the access point 104 and the access point 106 during a short period, the station 108 records the keep-alive failure counts C_KAF of the access point 104 and the access point 106 separately.

According to the controller-based roaming process 20 in FIG. 2, in Step 206, the wireless access controller 100 maintains the block list according to the received block report. Specifically, each entry of the block list is composed of a report time T_Report and a pair of a MAC address of a blocked access point and a MAC address of a station that reports the blocked access point to the wireless access controller. After receiving the block report, the wireless access controller adds the blocked access point in the block list or updates a report time T_Report of the access point in the block list.

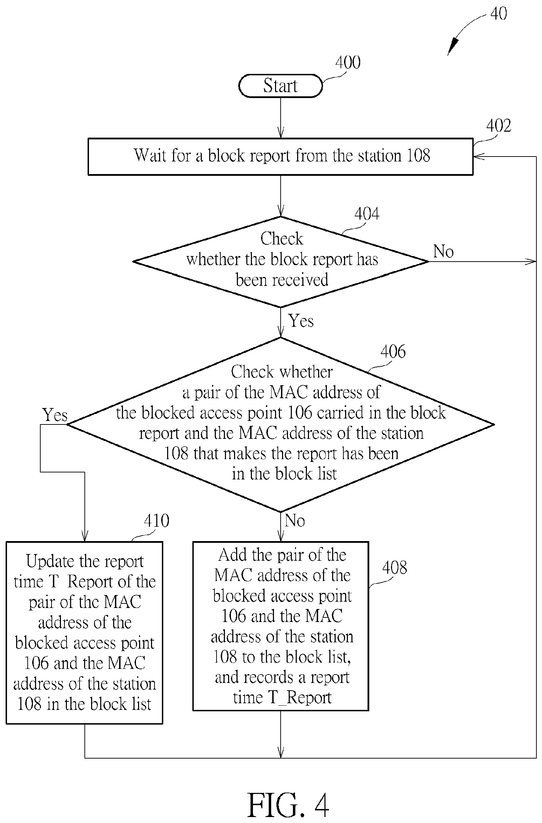

The method for the wireless access controller 100 to maintain the block list in Step 206 may be summarized into a process 40 shown in FIG. 4. The process 40 illustrates how the wireless access controller 100 adds the blocked access point 106 to the block list and updates the block list according to the block report from the station 108, and comprises the following steps:
Step 400: Start.
Step 402: The wireless access controller 100 waits for a block report from the station 108.
Step 404: The wireless access controller 100 checks whether the block report has been received. If yes, proceed to Step 406; otherwise, proceed to Step 402.
Step 406: The wireless access controller 100 checks whether a pair of the MAC address of the blocked access point 106 carried in the block report and the MAC address of the station 108 that makes the report has been in the block list. If yes, proceed to Step 410; otherwise, proceed to Step 408.
Step 408: The wireless access controller 100 adds the pair of the MAC address of the blocked access point 106 and the MAC address of the station 108 to the block list, and records a report time T_Report.
Step 410: The wireless access controller 100 updates the report time T_Report of the pair of the MAC address of the blocked access point 106 and the MAC address of the station 108 in the block list.

According to the process 40, the wireless access controller 100 receives the block report with a blocked access point from the station 108, and then maintains the block list on the basis of the block report.

Specifically, after receiving the block report, the wireless access controller 100 checks whether the reported access point has been in the block list. When the pair of the MAC address of the blocked access point and the MAC address of the station that makes the block report has not been in the block list, the wireless access controller 100 adds the pair of the MAC address of the access point and the MAC address of the station to the block list and records the report time T_Report. When the pair of the MAC address of the blocked access point and the MAC address of the station that makes the block report has been in the block list, the wireless access controller 100 just updates the report time T_Report of the pair of the MAC address of the access point and the MAC address of the station.

The block list may be as shown in Table 1 below. It should be noted that Table 1 only represents the necessary information about the blocked access point required to implement the embodiments of the present invention, and those skilled in the art may make various modifications and adjustments accordingly, and is not limited to this.

**Table 1**

| **Access Point** | **Station** | **Report Time** |
|---|---|---|
| MAC_ADDRESS_1 | MAC_ADDRESS_2 | T_Report_1 |
| MAC_ADDRESS_3 | MAC_ADDRESS_4 | T_Report_2 |

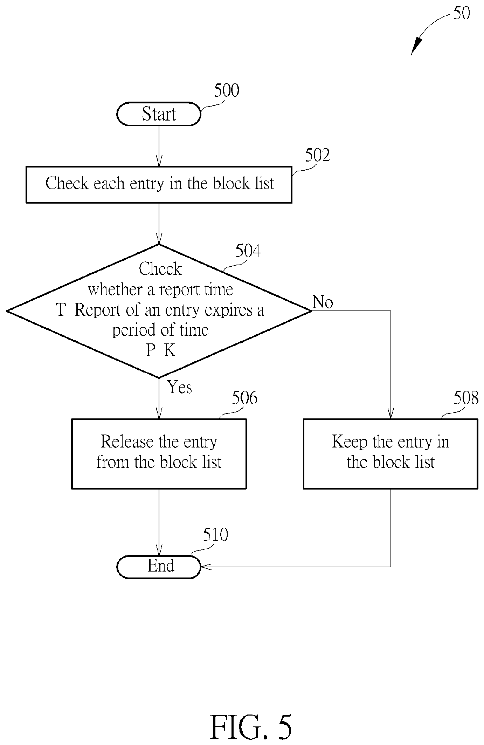

The issue of poor wireless transmission may be resolved due to changes in the environment or other factors. Therefore, the access points with problematic signals should not be permanently blocked. In addition to adding or updating the block list on the basis of the block report, the wireless access controller 100 further determines whether to release a blocked access point from the block list. The method for the wireless access controller 100 to release the blocked access point in Step 206 may be summarized into a process 50 as shown in FIG. 5. The process 50 comprises the following steps:
Step 500: Start.
Step 502: The wireless access controller 100 checks each entry in the block list.
Step 504: The wireless access controller 100 checks whether a report time T_Report of an entry expires a period of time P_K. If yes, proceed to Step 506; otherwise, proceed to Step 508.
Step 506: The wireless access controller 100 releases the entry from the block list.
Step 508: The wireless access controller 100 keeps the entry in the block list.
Step 510: End.

According to the process 50, the wireless access controller 100 releases the blocked access point that is not reported as a blocked access point again for the period of time P_K from the block list. Specifically, when the report time T_Report corresponding to the pair of the MAC address of the blocked access point and the MAC address of the station 108 that reports the access point expires the predetermined period of time P_K, the wireless access controller releases the pair of the MAC address of the access point and the MAC address of the station 108 from the block list.

For example, the station 108 determines whether to block the problematic (suspicious) access point 106 and make a block report thereof to the wireless access controller 100 if necessary. After receiving the block report, the wireless access controller 100 adds the blocked access point 106 in the block list if the blocked access point 106 is not recorded, or updates the report time T_Report of the access point 106 in the block list. Then, the wireless access controller 100 releases the blocked access point 106 from the block list after not receiving the block report of the access point 106 for more than the period of time P_K. After the access point 106 is released from the block list, it is possible for the station 108 to roam to the access point 106 again under the control of the wireless access controller 100.

Furthermore, the wireless access controller 100 records the number of times that an access point is reported as a blocked access point and thereby progressively increases the predetermined period of time P_K for blocking the blocked access point. For example, the station 108 may roam to an access point just released from the block list, and then ask to block the access point again due to poor transmission conditions. In this situation, extending the predetermined period of time P_K for blocking may effectively reduce the number of sending blocking request and the problem of repeated re-roaming.

It should be noted, the wireless access controller 100 is illustrated to receive block report from the station 108; however, the wireless access controller 100 may receive block reports from all stations that register thereto. Moreover, all access points that register to the wireless access controller 100 may be a blocked access point reported by the stations.

Accordingly, when roaming decisions need to be made, the wireless access controller 100 may utilize the block list to filter out the blocked access points.

Please refer back to FIG. 1. In the network system 1, the station 108 starts in the location A and connects to the network system 1 through the access point 104, and then moves to the new location B. In this situation, the access points 104-106 continue to receive wireless signals of the station 108, and thereby detect the signal statuses thereof and report the signal statuses to the wireless access controller 100. The wireless access controller 100 receives the signal statuses related to the station 108 from the access points 104-106, and then determines whether the station 108 needs to roam from the access point 104 to another access point according to the signal statuses and the block list.

Different from the prior art which only uses RSSI reports as the basis for roaming decisions, the present invention makes roaming decisions based on the signal status and the block list. In the present invention, the signal status is used to determine whether the station needs roaming and to select target access points for roaming, and the block list is used to filter out the target access points with problematic signals.

In the present invention, the signal status used to evaluate roaming of the station may be the signal strength, the signal quality, or a comprehensive rating of the signal strength and the signal quality. The signal strength may be and not limited to RSSI, reference signal received power (RSRP), etc. The signal quality may be and not limited to signal-to-noise ratio (SNR), signal-to-noise-plus-interference ratio (SNIR), channel quality indicator (CQI), signal continuity duration, signal interruption rate, etc.

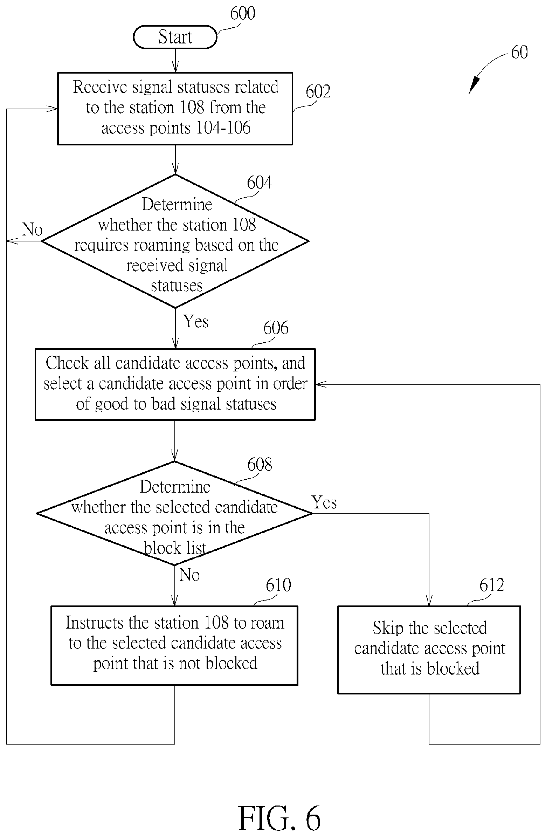

The method for the wireless access controller 100 to determine roaming decisions using the block list in Step 208 may be summarized into a roaming decision process 60 as shown in FIG. 6. The roaming decision process 60 comprises the following steps:
Step 600: Start.
Step 602: The wireless access controller 100 receives signal statuses related to the station 108 from the access points 104-106.
Step 604: The wireless access controller 100 determines whether the station 108 requires roaming based on the received signal statuses. If yes, proceed to Step 606; otherwise, proceed to Step 602.
Step 606: The wireless access controller 100 checks all candidate access points (i.e., the access points 105 and 106), and selects a candidate access point in order of good to bad signal statuses.
Step 608: The wireless access controller 100 determines whether the selected candidate access point is in the block list. If yes, proceed to Step 612; other, proceed to Step 610.
Step 610: The wireless access controller 100 instructs the station 108 to roam to the selected candidate access point that is not blocked.
Step 612: The wireless access controller 100 skips the selected candidate access point that is blocked, and proceeds to Step 606.

According to the roaming decision process 60, the wireless access controller 100 uses the block list and the signal statuses to make roaming decisions for the station 108. Take the access point 106 reported as a blocked access point by the station 108 as an example for explanation. When the station 108 moves to the new location B from the location A, the access point 104 is far and the wireless signals thereof become weak. Therefore, the wireless access controller 100 determines that the station 108 requires roaming according to the received signal statuses. The wireless access controller 100 checks all candidate access points (the access points 105 and 106), and finds in the block list that the access point 106 was reported as a blocked access point by the station 108. In this situation, even if the wireless signal strength of the access point 106 is sufficient, the wireless access controller 100 will not select the access point 106 as a target access point for roaming to. Finally, the wireless access controller 100 instructs the station 108 to roam to the unblocked access point 105.

In Step 602, the wireless access controller 100 receives signal statuses related to the station 108 from the access points 104-106. Specifically, the station 108 periodically switches channels in a short period to send wireless signals for background broadcast. Correspondingly, the access points 104-106 measure the signal statuses, including strengths, signal qualities, or both of them, related to the station 108, and then report the measured signal statuses to the wireless access controller 100. The wireless access controller 100 receives the signal statuses and accordingly makes the roaming decision for the station 108.

In Step 604, the wireless access controller 100 determines whether the station 108 requires roaming based on the received signal statuses. In an embodiment, when the signal status reported by the access point that the station 108 is currently connected to is worse than a first threshold, the wireless access controller 100 determines that the station 108 requires roaming. In an embodiment, when the signal status reported by the access point that the station 108 currently connected to has been worse than the first threshold for a predetermined period of time, the wireless access controller 100 determines that the station 108 requires roaming. The signal status that the wireless access controller 100 uses to determine whether the station 108 needs to perform roaming comprises indicators related to signal strength, signal quality or a comprehensive rating of the signal strength and the signal quality. For example, if the RSSI value used to evaluate signal strength related to the station 108 is lower than the first threshold, the wireless access controller 100 determines that the station 108 needs to roam to another access point to ensure better connection quality.

In Step 606 and Step 608, the wireless access controller 100 sorts all the candidate access point by signal statuses, and selects a candidate access point with the best signal status. Then, the wireless access controller 100 checks whether the candidate access point is recorded in a block list. In an embodiment, the wireless access controller 100 only checks the blocked access point reported by the station 108; therefore, the blocked access points reported by other stations does not affect the roaming decision for the station 108. In another embodiment, the wireless access controller 100 further checks the blocked access point reported by other stations in addition to the station 108, which can be used as a reference for roaming decisions. It should be noted, in the embodiments of the present invention, the candidate access points of the station 108 refer to access points from which the wireless access controller 100 has received the signal status of the station 108 (i.e., the access points 105 and 106), excluding the access point to which the station 108 is currently connected (i.e., the access points 104).

If the selected candidate access point is recorded as a blocked access point in the block list, the wireless access controller 100 skips the blocked access point in Step 612 and proceeds to check the next candidate access point in Step 606; otherwise, the wireless access controller 100 determines the selected candidate access point as the target access point for roaming and then instructs the station 108 to roam to the target access point in Step 610.

In brief, the wireless access controller 100 continues receiving signal statuses related to the station measured from the access points. When a signal status reported by the access point is worse than the first threshold or has been worse than the first threshold for a predetermined period of time, the wireless access controller 100 instructs the station to roam to a target access point that has a best signal status and is not in the block list. In the example, the wireless access controller 100 continues receiving signal statuses related to the station 108 measured from the access points 104-106. When the signal status reported by the access point 104 that the station 108 is currently connected to is worse than the first threshold, the wireless access controller 100 instructs the station 108 to roam to the access point 104 that has a better signal status and is not in the block list.

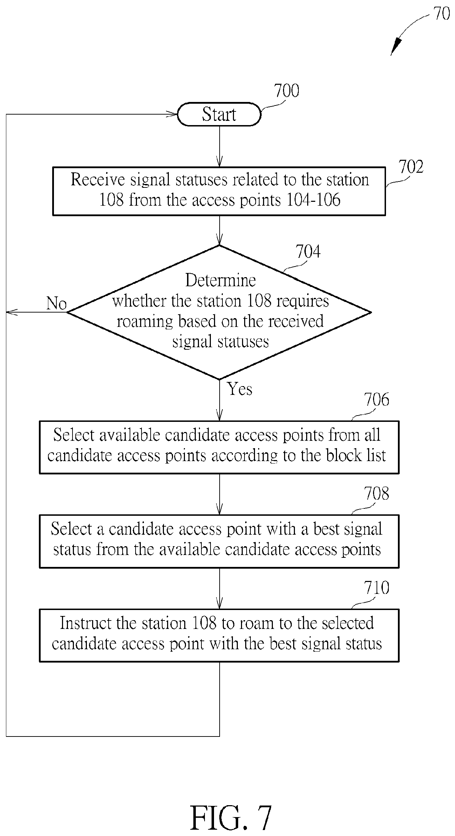

In another embodiment, the method for the wireless access controller 100 to determine roaming decisions using the block list in Step 208 may be summarized into a roaming decision process 70 as shown in FIG. 7. The roaming decision process 70 comprises the following steps:
Step 700: Start.
Step 702: The wireless access controller 100 receives signal statuses related to the station 108 from the access points 104-106.
Step 704: The wireless access controller 100 determines whether the station 108 requires roaming based on the received signal statuses. If yes, proceed to Step 706; otherwise, proceed to Step 702.
Step 706: The wireless access controller 100 selects available candidate access points from all candidate access points (i.e., the access points 105 and 106) according to the block list.
Step 708: The wireless access controller 100 selects a candidate access point with a best signal status from the available candidate access points.
Step 710: The wireless access controller 100 instructs the station 108 to roam to the selected candidate access point with the best signal status, and proceeds to Step 702.

According to the roaming decision process 70, the wireless access controller 100 uses the block list and the signal statuses to make roaming decisions for the station 108. Take the same example aforementioned in the roaming decision process 60. Same as Step 602 and Step 604 of the roaming decision process 60, the wireless access controller 100 determines that the station 108 requires roaming based on the received signal status measured by the currently connected access point 104 in Step 702 and Step 704, and therefore selects a target access point for the station 108 to roam to. In this embodiment, the wireless access controller 100 firstly selects available candidate access points that are not in the block list from all candidate access points in Step 706, and then selects a candidate access points with a best signal status as the target for roaming from the selected available candidate access points in Steps 708-710. In the example, the access point 105 is selected as the available candidate access point from all the candidate access points 105 and 106, and then selected as the target access point for roaming. It should be noted, in other cases where there is more than one available candidate access points, the wireless access controller 100 should select the candidate access point with the best signal status as the target access point for roaming among all available candidate access points.

In brief, the wireless access controller 100 continues receiving signal statuses related to the station measured from the access points. When a signal status reported by the access point is worse than the first threshold or has been worse than the first threshold for a predetermined period of time, the wireless access controller 100 instructs the station to roam to a target access point with the best signal status among the access points not in the block list.

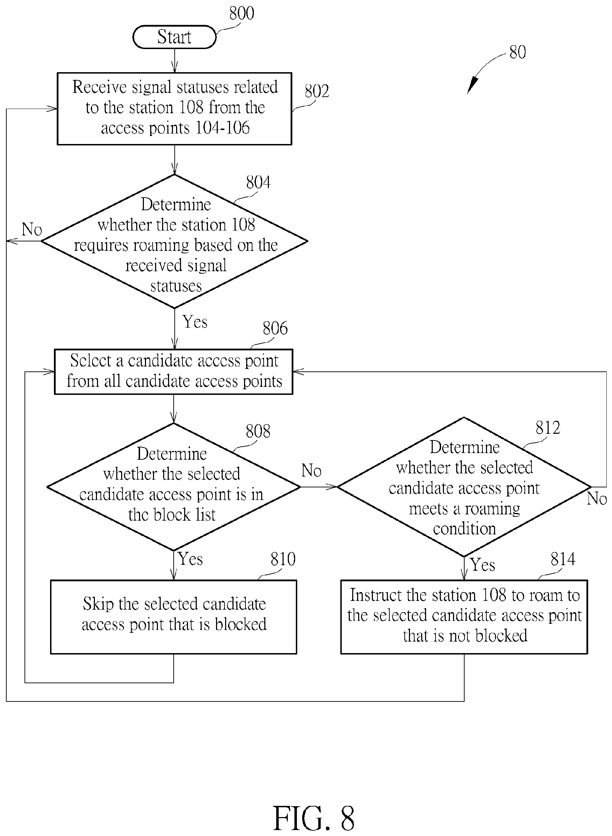

In another embodiment, the method for the wireless access controller 100 to determine roaming decisions using the block list in Step 208 may be summarized into a roaming decision process 80 as shown in FIG. 8. The roaming decision process 80 comprises the following steps:
Step 800: Start.
Step 802: The wireless access controller 100 receives signal statuses related to the station 108 from the access points 104-106.
Step 804: The wireless access controller 100 determines whether the station 108 requires roaming based on the received signal statuses. If yes, proceed to Step 806; otherwise, proceed to Step 802.
Step 806: The wireless access controller 100 selects a candidate access point from all candidate access points.
Step 808: The wireless access controller 100 determines whether the selected candidate access point is in the block list. If yes, proceed to Step 810; other, proceed to Step 812.
Step 810: The wireless access controller 100 skips the selected candidate access point that is blocked.
Step 812: The wireless access controller 100 determines whether the selected candidate access point meets a roaming condition. If yes, proceed to Step 814; otherwise, proceed to Step 806.
Step 814: The wireless access controller 100 instructs the station 108 to roam to the selected candidate access point that is not blocked, and proceeds to Step 802.

According to the roaming decision process 80, the wireless access controller 100 uses the block list and the signal statuses to make roaming decisions for the station 108. Take the same example aforementioned in the roaming decision process 60. Same as Step 602 and Step 604 of the roaming decision process 60, the wireless access controller 100 determines that the station 108 requires roaming based on the received signal status measured by the currently connected access point 104 in Step 802 and Step 804, and therefore selects a target access point for the station 108 to roam to. In this embodiment, the wireless access controller 100 checks each candidate access point one by one. The wireless access controller 100 firstly selects a candidate access point in Step 806 and checks whether the selected candidate access point is a blocked access point according to the block list in Step 808. When the selected candidate access point is a blocked access point, the wireless access controller 100 skips the selected access point and checks another candidate access point in Step 806; the wireless access controller 100 further determines whether the selected candidate access point meets a roaming condition in Step 812. Specifically, the roaming condition may be but is not limited to the signal status reported by the unblocked access point being better than a second threshold. In another embodiment, the roaming condition may be that the signal status reported by the unblocked access point is the best among all candidate access points. When the selected access point meets the roaming condition, the wireless access controller 100 instructs the station 108 to roam to the selected access point in Step 814; otherwise, the wireless access controller 100 skips the selected access point and checks another candidate access point in Step 806. In the example, the wireless access controller 100 firstly selects one of the access points 105 and 106 to check. If the selected access point is not a blocked access point and meets the roaming condition, the wireless access controller 100 instructs the station 108 to roam to the selected access point; otherwise, the wireless access controller 100 selects the other access point to check.

In brief, the wireless access controller 100 continues receiving signal statuses related to the station measured from the access points. When a signal status reported by the access point is worse than the first threshold or has been worse than the first threshold for a predetermined period of time, the wireless access controller 100 instructs the station to roam to a target access point that has a signal status being better than the second threshold and is not in the block list.

Accordingly, the wireless access controller 100 may avoid the access points with problematic signals according to the block list and the signal statuses.

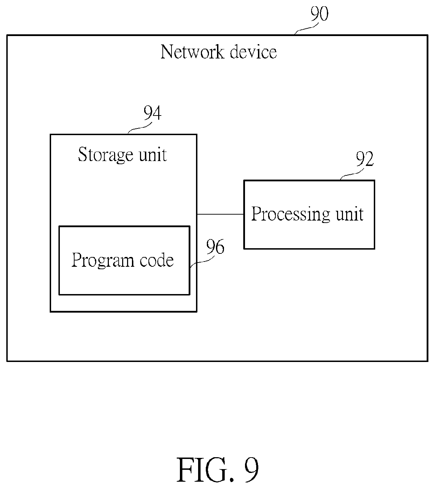

Furthermore, please refer to FIG. 9, which is a schematic diagram of a network device 90 according to an embodiment of the present invention. The network device 90 is used to implement the wireless access controller 100, the access points 104-106 and the station 108. As shown in FIG. 9, the network device 90 may comprise a processing unit 92 and a storage unit 94. The processing unit 92 may be and not limited to a general-purpose processor, a microprocessor or an application-specific integrated circuit (ASIC). The storage unit 94 may be any type of data storage devices for storing a program code 96, and the program code 96 is read and executed by the processing unit 92. For example, the storage unit 94 may be a read-only memory (ROM), a flash memory, a random-access memory (RAM), a hard disk, an optical data storage device, a non-volatile storage unit or a combination thereof, and is not limited thereto.

The network device 90 is used to represent the necessary components required to implement the embodiments of the present invention, and those skilled in the art may make various modifications and adjustments accordingly, and is not limited to this. For example, when the network device 90 is applied to implement the station 108, the blocking decision process 30 for determining a blocked access point may be complied into the program code 96, stored in the storage unit 94, and executed by the processing unit 92. When the network device 90 is applied to implement the wireless access controller 100, the processes 40 and 50 for maintaining the block list and the roaming decision processes 60, 70 or 80 for making roaming decisions may be complied into the program code 96, stored in the storage unit 94, and executed by the processing unit 92. Moreover, the storage unit 94 is also used for storing the block list, data of signal statuses, and the data required for running the method of the embodiment of the present invention, and is not limited thereto.

In summary, the present invention provides a wireless access controller and a controller-based roaming method, capable of achieving stable network connectivity after roaming.

## Claims

1. A controller-based roaming method, **characterized by** comprising:
determining, by a station (108), whether to block an access point (104-106);
sending, by the station (108), a block report of the access point (104-106) to a wireless access controller (100);
maintaining, by the wireless access controller (100), a block list according to the received block report; and
performing, by the wireless access controller (100), roaming control for the station (108) according to the block list and signal statuses reported by a plurality of access points (104-106).

2. A wireless access controller (100), **characterized by** comprising:
a processing unit (92), configured to execute a program code; and
a storage unit (94), coupled to the processing unit, configured to store the program code (96) to instruct the processing unit to execute a controller-based roaming method, wherein the controller-based roaming method comprises:
receiving a block report of an access point (104-106) from a station (108);
maintaining a block list according to the received block report; and
performing roaming control for the station (108) according to the block list and signal statuses reported by a plurality of access points (104-106).

3. The controller-based roaming method of claim 1 or the wireless access controller (100) of claim 2, **characterized in that** the station (108) determines whether to block the access point (104-106) according to a keep-alive mechanism with the access point (104-106).

4. The controller-based roaming method or the wireless access controller (100) of claim of claim 3, **characterized in that** the station (108) determines to block the access point (104-106) when a number of consecutive keep-alive failures that occur within a predetermined period exceeds a predetermined number.

5. The controller-based roaming method of claim 1 or the wireless access controller (100) of claim 2, **characterized in that** the block report comprises a media access control, called MAC hereinafter, address of the access point (104-106).

6. The controller-based roaming method of claim 1 or the wireless access controller (100) of claim 2, **characterized in that** each entry of the block list is composed of a report time and a pair of a MAC address of a blocked access point and a MAC address of the station (108) that reports the blocked access point.

7. The controller-based roaming method or the wireless access controller (100) of claim of claim 6, **characterized in that** the step of the wireless access controller (100) maintaining the block list according to the received block report comprises:
when a pair of a MAC address of the access point and a MAC address of the station (108) has been in the block list, updating a report time of the pair of the MAC address of the access point and the MAC address of the station (108); and
when the pair of the MAC address of the access point and the MAC address of the station (108) has not been in the block list, adding the pair of the MAC address of the access point and the MAC address of the station (108) to the block list and recording the report time.

8. The controller-based roaming method or the wireless access controller (100) of claim of claim 7, **characterized in that** the step of the wireless access controller (100) maintaining the block list according to the received block report further comprises:
when the report time corresponding to the pair of the MAC address of the access point and the MAC address of the station (108) expires a predetermined period of time, releasing the pair of the MAC address of the access point and the MAC address of the station (108) from the block list.

9. The controller-based roaming method or the wireless access controller (100) of claim of claim 8, **characterized in that** the wireless controller records a number of times that the access point is reported as a blocked access point, and progressively increases the predetermined period of time for blocking the blocked access point according to the number of times.

10. The controller-based roaming method of claim 1 or the wireless access controller (100) of claim 2, **characterized in that** the step of the wireless access controller (100) performing roaming control for the station (108) according to the block list and the signal statuses reported by the plurality of access points (104-106) comprises:
receiving signal statuses related to the station (108) measured from the plurality of access points (104-106); and
when a signal status reported by the access point is worse than a first threshold or has been worse than the first threshold for a predetermined period of time, instructing the station (108) to roam to a target access point that has a best signal status and is not in the block list.

11. The controller-based roaming method of claim 1 or the wireless access controller (100) of claim 2, **characterized in that** the step of the wireless access controller (100) performing roaming control for the station (108) according to the block list and the signal statuses reported by the plurality of access points (104-106) comprises:
receiving signal statuses related to the station (108) measured from the plurality of access points (104-106); and
when a signal status reported by the access point is worse than a first threshold or has been worse than the first threshold for a predetermined period of time, instructing the station (108) to roam to a target access point with a best signal status among the plurality of access points not in the block list.

12. The controller-based roaming method of claim 1 or the wireless access controller (100) of claim 2, **characterized in that** the step of the wireless access controller (100) performing roaming control for the station (108) according to the block list and the signal statuses reported by the plurality of access points (104-106) comprises:
receiving signal statuses related to the station measured from the plurality of access points (104-106); and
when a signal status reported by the access point is worse than a first threshold or has been worse than the first threshold for a predetermined period of time, instructing the station (108) to roam to a target access point that has a signal status being better than a second threshold and is not in the block list.

13. The controller-based roaming method of claim 1 or the wireless access controller (100) of claim 2, **characterized in that** the signal statuses comprises signal strengths and signal qualities.
